(19) Europäisches Patentamt / European Patent Office / Office européen des brevets

(11) **EP 4 186 352 A1**

(12) **EUROPEAN PATENT APPLICATION**

(43) Date of publication:
**31.05.2023 Bulletin 2023/22**

(21) Application number: **22000254.7**

(22) Date of filing: **22.11.2022**

(51) International Patent Classification (IPC):
**A01G 9/22** *(2006.01)* **A01G 9/24** *(2006.01)*

(52) Cooperative Patent Classification (CPC):
**A01G 9/22; A01G 9/245; A01G 9/246**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2021 PCT/GR2021/000073**

(71) Applicants:
• **Papadakis, Georgios
  15122 Maroussi (GR)**

• **Agricultural University of Athens - Special
  Account for Research Funds
  11855 Athens (GR)**

(72) Inventor: **Papadakis, Georgios
  15122 Maroussi (GR)**

(74) Representative: **Vavekis, Konstantinos
  PO Box 1
  Mesarmos
  Voutes
  70013 Heraklion, Crete (GR)**

(54) **A GREENHOUSE'S HEATING SYSTEM**

(57) The present invention provides a radiant heating system comprising low temperature radiant heating assemblies suitable to maintain the greenhouse plants (and not the greenhouse air) at a desired optimum temperature. Heat is provided to the screen (2, 3) itself and subsequently the screen (2, 3) provides the necessary heat to the plants by long wave radiation. The temperature of the heated screen (2, 3) is kept a few degrees Celsius higher than the optimum temperature required by the plants. Preliminary experimental trials have shown that temperatures of the heated screen (2, 3) such as slightly above the optimum plant temperature up to about 10 °C above the optimum plant temperature, are adequate to maintain the plants at their optimum temperature at very low air temperatures outside the greenhouse, while achieving high energy saving relative to conventional greenhouse air heating systems.

GREENHOUSE WITH HEATED SCREEN EXTENDED
AXONOMETRIC VIEW

DETAIL "A"

**Description**

**BACKGROUND**

**Field of the invention**

This invention relates to greenhouse heating systems and more particularly, to radiant heating systems for enclosures for plants cultivation such as greenhouses.

**State of the art**

Greenhouse cultivation is evolving rapidly in recent years because depending on the equipment used and their technological level, crop production can be 10-20 times higher per unit area than the outdoor one [1]. A controlled environment provides conditions for optimal plant growth and production throughout the year, resulting in higher productivity and products of higher quality [2]. However, to achieve a controlled environment, even at mild winter conditions, greenhouses must be equipped with a heating system. The thermal losses of the greenhouse due to its thin walls and light construction are estimated to be 6-12 times greater than those of an ordinary building of equal volume and heating constitutes one of the major costs for modern high technology greenhouses even for the Mediterranean countries [3]. To reduce energy consumption, some straightforward measures can be applied, such as double-glazing insulation, use of different types of covering materials on the roof and side walls (such as glass panes with modified optical properties, polyethylene plastic sheets with reduced transparency to long wave radiation, double inflated polyethylene plastic sheets), use of insulating materials on the North facing side walls, implementation of passive (i.e., unheated) usually called "thermal screens" [4-6]. Although these methods do result in energy saving, they do not question the traditional concept of heating the entire greenhouse environment (air, structure, and cover) and then letting the plants gain energy from it which results in high energy consumption. The implementation of passive, unheated thermal screens can indeed result in considerable energy saving in systematically heated greenhouses [7]. During winter cold months, the thermal screen is automatically deployed at about sunset time under the roof and next to the side walls to fully enclose the plants inside the enclosure. At about sunrise, the screen is automatically retracted to let the solar radiation enter the greenhouse during daytime. Passive thermal screens reduce the heating energy consumption due to three major mechanisms [8]: a) by decreasing the overall (global) heat loss coefficient of the greenhouse by adding thermal resistance, b) by reducing the long wave radiation loss of the plants to the cold cover (the screen is always hotter than the cover since it is inside the heated greenhouses) and maintain the plants at a higher temperature than it would be without a screen, c) by reducing the volume of the air to be heated i.e. the air volume under the screen. Such passive thermal screens are usually made of polymer materials and are given special properties to enhance their effectiveness in energy saving, such as aluminised surface facing the plants with low emissivity and high reflectivity to long wave radiation to reflect back long wave radiation emitted by the plants while they are partially permeable to air and vapour avoiding high air humidity near the plants and condensation on the screen and the plants that increases the threat of diseases [9].

Today, most conventional greenhouse heating systems are based either on circulation of hot water through a piping system (expensive) or on direct use of air heaters (less expensive), i.e., forced air heating. The design and operational objective of conventional heating systems is to maintain the air temperature inside the greenhouse at values optimal for plant growth, neglecting the fact that the target object are the plants themselves and not the air. Heat is supplied to the greenhouse air to maintain the air at temperature a little higher than the value opted for the plants so that to keep them within a physiologically defined temperature range for optimal growth termed as physiologically optimum temperature range. The optimum plant growth temperature (i.e., plants grown in greenhouses such as tomatoes, cucumbers, aubergines, watermelons, etc.), is about 20 °C (for the tomato plant which is the plant most often grown in greenhouses internationally [10]) while for energy saving purposes, at very cold nights, the growers usually heat the greenhouse air to a much lower temperature (at least 11 °C). Temperature is an important environmental factor that influences the growth of greenhouse crops. There are three important temperature points in plant growth: minimum temperature, optimum temperature, and maximum temperature. Crops do not respond in the same manner to temperatures at all stages of growth. For example, the optimum temperature for vegetative growth may not be suitable for flower development. Most crops generally grow better if the day temperature is warmer than the night. The optimum temperature can be around 21 °C for cool-season crops, or as high as 32 °C for warm-season crops. Temperature considerably influences plant growth and development during the various stages of growth, i.e., seed germination, vegetative phase, reproductive phase, and ripening phase. The optimum temperature of a plant species changes as the plant grows from a seedling to a mature plant. For example, warmer temperatures are generally favoured by younger plants.

In horticultural practice (see [10] to [13]) it is well known today which are the optimum temperatures for most of the greenhouse grown crops. For example, the optimal temperature range for a mature tomato crop is recommended to be between 20 °C and 22 °C, for a cucumber crop at the stage of flowering the optimum thermal range is between 25 °C and 28 °C, for sweet peppers between 23 °C and 28 °C.

It is also important to note that plants do not have any internal temperature regulation mechanism such as mammals and their temperature depend on their instantaneous energy and mass balance and since (most) plants do not store heat, the heating system must provide the necessary heat in order to compensate for their long wave radiation and convection losses considering that the mass transfer (plant's transpiration) is very small during the night [14].

The above-mentioned heating systems dominate the greenhouse commercial practice even though as early as in the 70's, more efficient options had been proposed, e.g. [15]. It has been proven that long wave radiant heating with radiant tubes (commercially known as "infrared radiant heaters"), can be more efficient than the widely spread forced air or hot pipes heating systems [16,17]. Long wave radiant heating is based on the radiative heat transfer mechanism rather than the convective one as the case of the forced air system. Experimental and simulation results show that (high temperature) radiant heating can supply heat in a more efficient way to cover the plants' heat losses, while the greenhouse air temperature during the night remains several degrees lower than the actual plant temperature [16,17]. Such results have shown a significant potential for energy saving over other conventional heating systems. Though, such greenhouse radiant heating has also disadvantages. The cost of the initial system is high and supplying heat to tall greenhouse crops is relatively difficult because radiation cannot reach the lower plant leaves since the very hot radiant tubes (temperature range 500 °C to 2000 °C) should be kept at a safe distance from the plants, while there are also fire risks. Such systems do not distribute the heat uniformly to the plants since the radiant heat is produced by linear sources in which the temperature is not uniform along their length. Such systems typically provide for reflective insulating panels which, are unsatisfactory since the plants need uniform heat.

Radiant heating systems have been used to heat greenhouses. Radiant systems provide an indirect source of heat and are generally capable of having heating elements which can be more precisely positioned inside a greenhouse. Radiant heating systems typically employ metallic energy-emitting tubular conduits mounted overhead of an area to be heated. Such systems further include a burner which fires a heated effluent into the conduit, an opaque reflector mounted over the conduit, and an exhaust system to expel the effluent and products of combustion outside the greenhouse. One such radiant heater system is disclosed in Johnson U.S. Pat. No. 3,399,833 [22].

A characteristic of these radiant heating systems is the wide variance in the amount of thermal energy emitted from the hot conduit over its working length. While the temperature inside the metallic conduit immediately adjacent the burner may reach levels more than 1150 K the temperature inside the conduit at the exhaust end, depending on length, may be as low as 350 K. This results in an uneven emission of thermal energy over the length of the conduit. Unless the spacing of the tube from the area being heated is varied, there are correspondingly uneven temperatures in the area being heated by the system. This is especially true with low overhead mounted systems in high heat loss structures, such as greenhouses.

One attempt to more evenly distribute the thermal energy radiated by the metallic conduit is disclosed in Prince U.S. Pat. No. 4,319,125 [23]. Prince employs a dispersing reflector adjacent to the relatively hot initial portion of the metallic conduit and a parabolic or concentrating reflector adjacent to the colder end portion of the conduit to compensate for the varying intensity of thermal energy radiated over the length of the conduit. While the shaped reflector may provide some measure of improvement in the distribution of the thermal energy throughout the area serviced by the heater system, the opaque conduit and reflector obstruct sun radiation entering the greenhouse and produce a shadow which adversely affects the growth of plants thereunder.

In another attempt, KR 2010 0110659 A (KIM HONG GEUN) [24], the greenhouse is to be heated by large diameter metal ducts (e.g., made from aluminium) located inside the greenhouse, bearing holes that supply hot air. This system however does not provide radiant heat to the greenhouse plants but rather it heats the air of the greenhouse through a heat exchanger and then that hot air is distributed inside the greenhouse through the holes along the metallic ducts.

Another heating system is disclosed in CN 212 851 983 U (HANGZHOU TIANBANG AGRICULTURAL FACILITIES CO LTD) [25], where flat heating elements are presented for supplying heat to the greenhouse. Hot water is circulated inside the heating elements which in turn is supplied to the greenhouse. However not many details are provided such as to where the heating elements are placed inside the greenhouse, what are their dimensions, what is the hot water temperatures or the temperature of the surface of the heating element.

In CN 206 042 941 U (ZHENGZHOU VEGETABLE RES INST) [26], a heating system is disclosed regarding a nursery for seeds' germination or keep young seedlings in the nursery at an appropriate temperature environment. The seeds' bed or the pots located at the nursery bed are heated through a heating wire mesh positioned between two film layers. Electrical energy is provided to the wire which is heated and subsequently the heat is provided to the substrate of the nursery to keep it at a desired temperature. The nursery bed is covered on its top by a cover layer made of a plastic material which can be rolled to cover the seedbed or unrolled so that to uncover the seedbed. This cover layer is not heated by any means and therefore the heat produced by the wire mesh is provided to the seeds' bed or the seedlings' pots by conduction that is, no radiant heating is involved in this heating system.

In WO 92/22196 A1 (COMBUSTION RES CORP) [27] a radiant heating system for greenhouse is disclosed that uses plastic tubes of large diameter, permanently fixed under the greenhouse roof, where hot air of 200 °F (~93.3 °C) is circulated through a heat exchanger.

The main drawbacks of the prior art heating systems to heat greenhouses using either conventional or radiant heating systems are the high energy consumption required to heat all the volume of the greenhouse (including the inside air, the greenhouse frame, and the covering material), the high temperature (greater than 90 °C and up to about 2000 °C) and uneven temperature distribution, and the significant heat loses due to the high temperature differences between inside and outside of the greenhouse.

**Brief description of the invention**

The present invention provides a radiant heating system comprising low temperature radiant heating assemblies (heated screen units or screen units) of simple and inexpensive construction which deliver controlled and uniform low temperature heating so that to maintain the greenhouse plants (and not necessarily the greenhouse air) at a physiologically required temperature range for optimum growth of a specific plant species which is well known to the skilled to the art [10 to 14]. The disclosed system provides the necessary heat primarily to the screen unit itself (and not to the greenhouse air) and subsequently the screen unit will provide the necessary heat to the plants by long wave radiation, while part of the heat supplied to the screen unit will be (inevitably) supplied to the greenhouse air by convection. The temperature of the heated screen units is kept a few degrees Celsius higher than the optimum temperature required by the plants for their optimum growth. Preliminary experimental trials have shown that temperatures of the heated screen units slightly above the optimum plant temperature up to about 10 °C above the optimum plant temperature, are adequate to maintain the plants at their optimum temperature for maximising crop yield, at very low air temperatures outside the greenhouse.

It is emphasised that the intended system is to provide heat by long wave radiation to the plants themselves and not to heat the greenhouse air. Certainly, a portion of the total heat released from the present radiant heating system will be provided to the greenhouse air by convection while the major portion will be provided to the plants by long wave radiation. This fact and the low temperature of the heated screen ensure the higher energy efficiency of the present invention over the prior art.

In some embodiments, the heated screen units are installed inside the greenhouse, horizontally under the roof and vertically near the inside side of the vertical walls so that to fully enclose the plants when the heating system is in operation and the system will operate approximately from sunset to sunrise during the cold periods of the year. This concept of heating is based on the proven fact that the temperature of the plants in the greenhouse under radiant heating is kept several degrees higher than the greenhouse air because the plants' convection losses to the colder greenhouse air are compensated by the received radiant heat [16,17].

In some embodiments the heated screen units are manufactured from impermeable to air polymer (plastic) materials (such as polyethylene) and as the screen units are heated by heated air, they include air flow channels for its heating. Low temperature heated air (in a range of slightly above the optimum plant temperature (i.e., 0.5 °C up to about 10 °C above the required optimum growth plant temperature) is supplied to the air flow channels of the screen units through suitably connected plastic (rigid or non-rigid) air ducts that run along the greenhouse length and width and distribute uniformly the heated air to the several screen units' surface area.

In some embodiments the heated air is supplied to the screen units flow channels by one or more blowers which recirculate the air of the flow channels through a heat exchanger where the air is heated to the desired temperature by a burner/furnace where the heat is produced by means of any kind of solid, liquid, gaseous fossil fuel combustion or renewable fuel combustion (such as biofuels) or by an electrical heat pump or the air is heated by an electrically heated element such as an electrical resistance.

An industrial electronic controller will manage the operation of the burner/furnace, heat exchanger, and blower with the associated motorized air dampers, to produce air of appropriate temperature to be re-circulated in the flow channels of the screen units. By controlling the air temperature in the air flow channels, the temperature of the screen is regulated and in turn adjust the radiant heat required by the plants to attain their optimum temperature. The temperature of the screen and the plants is identified, recorded, and controlled in real time using appropriate temperature sensors located at suitable places on the screen and the leaves of the plants or contactless sensors that read the temperatures of the screen surface and of the leaves of the plants, e.g., by Infra-Red (IR) radiation thermometers. In the case of a heated screen unit with air flow channels the parts of the screen between the air flow channels (i.e. outside the area of the flow channels), will be perforated so that to allow the greenhouse air and moisture to move through, from the one side of the screen to the other, that is from the space that encloses the plants (which will have a higher humidity due to the plants' transpiration) to the space between the screen unit and the greenhouse cover (which will have a lower humidity).

In other embodiments an alternative type of heated screen is used which is made of a textile (fabric) material that is heated by electricity, via incorporated resistive wires or other electricity conductive material configured to produce heat upon the application of electricity. Electricity may be provided to the resistive wires (or conductive material) of the screen units by any source, such as the electricity grid, a renewable energy system (e.g., wind generator, photovoltaic system), or an electricity storage system such as an electro-chemical one (batteries).

In the case of a heating system including heated screen units made of a textile (fabric) material an industrial electronic controller regulates in real time the voltage and current supplied from the electricity source to the resistive wires of the screen units via the wiring network so that to regulate the temperature of the resistive wires (or other type of electrical conductors) and subsequently regulate the temperature of the screen using temperature sensors located at suitable locations on the screen and the plants (or other type of contactless temperature sensors).

In the case where the heated screen units are made of textile with embedded resistive wires (or other electricity conductive material configured to produce heat upon the application of electricity), the textile weaving is sparse enough so that to allow the greenhouse air and moisture to move through, (for the same purpose and similarly to the heated screen with the embedded air flow channels).

It was found to be essential for high energy savings, the screen unit surface facing to the cover at the roof and side walls of the greenhouse, is aluminized so that to provide a low emissivity and high reflectivity to long wave radiation and reduce radiation emission from that screen surface, while the side of the screen facing the plants will have high emissivity (as most of polymer plastic materials physically have) to intensify radiant heat emission towards the plants. Such differentiation in the emissivity values on the one and the other side of the heated screen will ensure that the heat released by radiation from the screen will be directed primarily to the plants while small amounts of radiative heat will be lost towards the cover. This is important to allow to heat the plants with radiant heat with the heated screen having only a few degrees above their optimum temperature. The prior art teaches away because the aluminized surface of the passive, unheated thermal screens facing the plants is of low emissivity (and high reflectivity) to long wave radiation in order to reflect the radiant heat of the plants backwards.

**Brief description of the drawings**

Figure 1 is a perspective view of a typical greenhouse equipped with the heated screen. In the right-hand side of the greenhouse the screen is deployed, in both horizontal and vertical directions inside the greenhouse, while in the left-hand side, for illustration purposes, the screen is retracted into small packages beside the greenhouse trusses and vertical posts.

Figure 2 is a perspective view of a typical greenhouse where the heated screen units are deployed in both the horizontal and vertical directions under the roof and beside the side walls respectively.

Figure 3 shows a detail of the ducts of one embodiment for the distribution of the air to the air flow channels of the horizontal and the vertical part of the screen and also shows the perforated parts of the screen.

Figure 4 shows a side view of the greenhouse with the screen retracted in the left-hand side of the greenhouse (and deployed in the right-hand side) and also shows the ducts for the distribution and recirculation of the air to and from the air flow channels of the screen.

Figure 5 shows the pipes for the distribution and recirculation of the air from the burners in front of the greenhouse to the screen units.

Figure 6 shows the mechanism for deploying and retracting the horizontal part of the heated screen units consisting of motor(s) that rotates rod bearing pinion gear(s) to move rack gear(s) connected to long rod(s) to deploy and retract the screen units.

While the present invention is amenable to various modifications and alternative forms, specifics thereof have been shown by way of example in the drawings and will be described in detail. It should be understood, however, that the intention is not to limit the present invention to the particular embodiments described. On the contrary, the intention is to cover all modifications, equivalents, and alternatives falling within the spirit and scope of the present invention as defined by the appended claims.

**Detailed description of the invention**

*The radiant heating system*

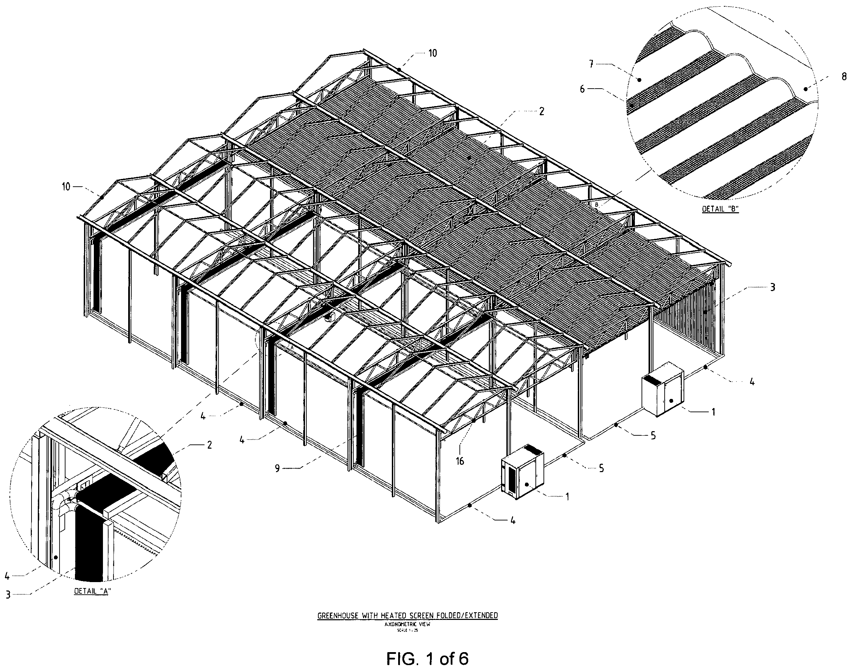

The present invention as depicted in Figure 1, provides for the heating of the plants of a greenhouse enclosure (10) in an easily assembled, substantially uniform, radiant heating system including a heat generating assembly (1), a heated air transport, distribution, and recirculation ducts' network (4, 5), heated screen units which is the radiant heating assemblies, generally composed of horizontal (2) and vertical (3) parts. It is essential that the screen units, both the horizontal and the vertical ones, when deployed they fully enclose the plantation of a greenhouse. Generally, the heat generating air distribution and recirculation assembly (1) produces a low temperature heated air effluent through an incorporated heat exchanger and the heated air is then distributed and recirculated via and incorporated blower, and the recirculation ducts' network (4, 5) to the several heated screen units/modules, horizontal (2) and vertical (3) ones (Figure 1).

In another embodiment the heating system includes heated screen units made of a textile (fabric) material, which are heated by electricity produced by an electricity source, via resistive wires or other electricity conductive material incorporated in the textile material. It is advantageous, the textile weaving to be sparse enough so that to allow the greenhouse air and moisture to move through, (for the same purpose that the heated screen with the embedded air flow channels is also perforated in the areas outside the air flow channels). Again, it is essential that the screen units, both the horizontal and the vertical ones, when deployed they fully enclose the plantation of a greenhouse.

*Theoretical background for the invented radiant heating system*

In order to verify the experimental data regarding the required heated screen units' temperature so that to keep the plants inside the greenhouse at a desired temperature when the air temperature outside the greenhouse is low, and given the fact that no experimental (or simulation) data exist in the literature for the disclosed radiant heating system, a simplified model (see Equations 1 to 7) was developed and executed to obtain answers to critical questions about the radiant heating system configuration and operation. With the use of the model, it was possible to answer critical questions regarding the proposed radiant heating system to verify our experimental data, by answering as well as selecting appropriate parameters used in greenhouses:

1. What the temperature of the screen should be so that the crop (e.g., a tomato plantation) to be maintained at a desired temperature of 13 °C during a cold night (e.g., at sub-freezing air temperature outside the greenhouse enclosure)?
2. What the air temperature inside the greenhouse would then be?
3. How and in what form heat should be supplied to the screen to maintain it at the required temperature keeping in mind that there will be no other heating system in the greenhouse?
4. What heat quantity would be required for heating the screen at the desired temperature level?

Next a description of the developed mathematical model is presented:

Heat balance of the air inside the greenhouse (Eq. 1):

$$h_{c.i} \cdot A_c \cdot (\theta_c - \theta_a) + h_p \cdot 2 \cdot A_p \cdot (\theta_p - \theta_a) + h_s \cdot 2 \cdot A_s \cdot (\theta_s - \theta_a) = 0 \qquad (1)$$

Heat balance of the greenhouse cover (Eq. 2):

$$h_{c.o} \cdot A_c \cdot (\theta_o - \theta_c) + h_{c.i} \cdot A_c \cdot (\theta_a - \theta_c) + A_s \cdot F_{s.c} \cdot \sigma \cdot (T_s^4 - T_c^4) + \varepsilon_c \cdot A_c \cdot \sigma \qquad (2)$$
$$\cdot (T_{sky}^4 - T_c^4) = 0$$

Heat balance of the plants (Eq. 3):

$$h_p \cdot 2 \cdot A_p \cdot (\theta_a - \theta_p) + A_s \cdot F_{s.p} \cdot \sigma \cdot \left(T_s^4 - T_p^4\right) = 0 \qquad (3)$$

Heat balance of the screen (Eq. 4):

$$h_s \cdot 2 \cdot A_s \cdot (\theta_a - \theta_s) + A_p \cdot F_{p.s} \cdot \sigma \cdot \left(T_p^4 - T_s^4\right) + A_s \cdot F_{s.c} \cdot \sigma \cdot \left(T_c^4 - T_s^4\right) + Q = 0 \qquad (4)$$

The several radiation shape factors (F) in Equations 2 to 4 are calculated with the following Equations 5 to 7, [18]:

$$F_{s.c} = \frac{1}{\frac{1}{\varepsilon_{s.c}} + \frac{A_s}{A_c}\left(\frac{1}{\varepsilon_c} - 1\right)} \quad (5),$$

$$F_{s.p} = \frac{A_p}{A_s} \cdot F_{p.s} = \frac{1}{\frac{1}{\varepsilon_p} \cdot \frac{A_s}{A_p} + \left(\frac{1}{\varepsilon_{s.p}} - 1\right)} \quad (6),$$

$$F_{p.s} = \frac{1}{\frac{1}{\varepsilon_p} + \frac{A_p}{A_s}\left(\frac{1}{\varepsilon_{s.p}} - 1\right)} \quad (7)$$

The symbols in the above Equations 1 to 7 are explained below:

| | |
|---|---|
| $h_{c.i}$ convection coefficient at the inside of the cover | $\theta_o$ temperature of the outside air (°C), symbol $T_o$ in (K) |
| $h_p$ convection coefficient (plants' leaves - inside air) | $T_{sky} = T_o - 11$ (K) [19] |
| $h_{c.o}$ convection coefficient at the outside of the cover | $\varepsilon_p$ emissivity of the plants |
| $h_s$ convection coefficient between screen and air (uniform at all sides of the screen horizontal & vertical) | $\varepsilon_{s.c}$ emissivity of the side of the screen facing the greenhouse cover |
| $A_p$ area of the plants' leaves (one side) | $\varepsilon_{s.p}$ emissivity of the side of the screen facing the plants |
| $A_s$ area of the screen (horizontal part plus the vertical part parallel to the greenhouse walls) | $\varepsilon_c$ emissivity of the cover (assumed having same values on the outside and the inside sides) |
| $A_c$ area of the cover (roof and side walls) | $F_{s.c}$ radiation shape factor between screen and cover |
| $\theta_c$ cover temperature (considered the same on the outside and the inside sides) (°C), symbol $T_c$ in (K) | $F_{s.p}$ radiation shape factor between screen and plants |
| $\theta_a$ temperature of the inside air (°C), symbol $T_a$ in (K) | $F_{p.s}$ radiation shape factor between plants and screen |
| $\theta_p$ temperature of the plants (°C), symbol $T_p$ in (K) | $\sigma$ the Stephan Boltzmann constant |
| $\theta_s$ screen temperature (same on both sides) (°C), symbol $T_s$ in (K) | Q the heat power to be given to the screen (kW) to keep the plants at a desired (given) temperature $\theta_p$ |

In the above model (Equations 1 to 7), it is assumed that no heat transfer takes place at the ground surface of the greenhouse enclosure and also assumed that no heat is stored in the plants [7] or the cover, (it is thin, and it has a very low specific heat), that is heat balances in Equations 1 to 5 are made considering steady state conditions during the night. For solving the above non-linear system of Equations 1 to 7, and determine the unknown values of $\theta_c$, $\theta_a$, $\theta_s$ and Q, let us assume that the desired plant temperature ($\theta_p$) during the night be equal to 13 °C (e.g., for a tomato plantation). Values of other desired plant temperatures have been tested with similar results. The known values (inputs to the model) of parameters and variables appearing in Equations 1 to 7 are shown in Table 1. The areas of the several surfaces have the following values: Greenhouse ground $A_g$=1000 m$^2$; Cover (roof and side walls) $A_c$=1525 m$^2$; Screen $A_s$=1400 m$^2$, (one side -horizontal and vertical parts); Plants (leaves -one side) $A_p$=3000 m$^2$, that is the area of the plant leaves ($A_p$) was considered equal to $A_p = LAI \cdot A_g$ where the Leaf Area Index (LAI) was assumed equal to 3 [20], namely $A_p$=3×1000=3000 m$^2$. Considering a variation of the outside air temperature ($\theta_o$) from -10 °C to +8 °C, the above system of equations is solved to obtain the unknown values of $\theta_c$, $\theta_a$, $\theta_s$ and Q (Table 2). Assuming that the required heating period will be t=5 hours (just for comparison purposes, -see next paragraph-), the required quantities of energy ($E_s$ in kWh) to heat the screen at the required temperature ($\theta_s$), are calculated by multiplying the needed heat power values (Q in kW) by 5 hours. Results are summarised in Table 2.

To estimate the amount of energy saving that can be achieved by the invented heating system, we consider an identical greenhouse (without screen) which in this case is heated by forced hot air. The total heat loss ($E_c$) of the forced hot air heated greenhouse is calculated by assuming an average overall heat loss coefficient; U = 5×10$^{-3}$ kW/m$^2$

°C (per unit cover area) [6]. Then,

$$E_c = A_c \cdot U \cdot (\theta_a - \theta_o) \cdot t \ (kWh) \qquad (8)$$

where t is the heating time (h).

The values of heat loss ($E_c$ in kWh) were calculated with Equation 8 at the several outside values of temperature $\theta_o$ (see Table 2), considering as desired air temperature inside the greenhouse $\theta_a$=13 °C assuming that for the case of forced air heating, the temperature of the plants will be equal to that of the inside air ($\theta_p$=$\theta_a$=13 °C) and also assuming that heating is provided for a period of t=5 hours. It is seen in Table 2 that the energy saving in the greenhouse equipped with the Heated Screen radiant system varies from about 65% to about 38% when the outside air temperature varies from -10 to +8 °C. Therefore, the results show that the Heated Screen radiant heating system has the potential to provide enormous reduction in energy consumption. The lower the outside air temperature, the greater the energy saving. In addition, no humidity condensation is expected to be formed on either the screen or the plants because both ($\theta_s$ and $\theta_p$) will have higher temperature than the greenhouse inside air temperature ($\theta_a$), (see Table 2), with positive effects on the plants' growth (fewer pathogens spread to the plants due to no existence of condensing droplets).

**Table 1. Inputs to the model** [5,21]

| $h_{c.i}$ =1.5x10⁻³ kW/m² °C | $h_{c.o}$ =4.5x10⁻³ kW/m² °C | $F_{s.c}$ =0.196 | $F_{s.p}$ =1.660 | $\varepsilon_{s.p}$ =0.9 | $\varepsilon_p$ =0.95 | $A_s$=1400 m² | LAI=3 |
|---|---|---|---|---|---|---|---|
| hs =2.5x10⁻³ kW/m² °C | hP =1.0x10⁻³ kW/m² °C | $F_{p.s}$ =0.775 | $\varepsilon_c$ =0.9 | $\varepsilon_{s.c}$ =0.1 | $A_g$=1000 m² | $A_c$=1525 m2 | $A_p$=3000 m² |

**Table 2. Model results (with desired plants' temperature set equal to 13 °C and inputs as in Table 1)**

| | | | | | | | | | | |
|---|---|---|---|---|---|---|---|---|---|---|
| Outside air temperature $\theta_o$ (°C) | -10 | -8 | -6 | -4 | -2 | 0 | 2 | 4 | 6 | 8 |
| Greenhouse cover temperature $\theta_c$ (°C) | -9.8 | -8.2 | -6.6 | -5.1 | -3.5 | -1.9 | -0.3 | 1.3 | 2.9 | 4.5 |
| Greenhouse inside air temperature $\theta_a$ (°C) | 10.2 | 10.4 | 10.5 | 10.8 | 10.9 | 11.2 | 11.4 | 11.6 | 11.8 | 11.9 |
| Heated screen temperature $\theta_s$ (°C) | 14.3 | 14.2 | 14.2 | 14.1 | 13.9 | 13.9 | 13.8 | 13.7 | 13.6 | 13.5 |
| Heated Screen power required, Q (kW) | 61 | 57 | 53 | 49 | 45 | 40 | 36 | 32 | 27 | 23 |
| Heated Screen energy required for 5 hours heating, $E_s$ (kWh) | 308 | 287 | 266 | 246 | 225 | 203 | 182 | 161 | 139 | 117 |
| Conventional (forced hot air system) power required, (kW) | 175 | 160 | 145 | 130 | 114 | 99 | 84 | 69 | 53 | 38 |
| Conventional system (forced hot air), energy required for t=5 hours heating, $E_c$ (kWh) | 877 | 801 | 724 | 648 | 572 | 496 | 419 | 343 | 267 | 191 |
| **Energy saving achieved by the Heated Screen (%), ($E_c$ - $E_s$)/ $E_c$ x 100** | **64.9** | **64.2** | **63.2** | **62.1** | **60.7** | **58.9** | **56.6** | **53.2** | **47.9** | **38.4** |

The above theoretical results (Table 2) show that under the assumed cold winter weather conditions, the heated screen units can fully supply the required heat, so that the plants to be maintained at the desired temperature conditions while the screen itself is being kept at a temperature of merely less than 2 °C above the desired temperature for the plants (see Table 2). It is also seen in Table 2 that the cover temperature ($\theta_c$) remains at low temperature, lower than the outside temperature as expected because the cover is cooled down to a temperature below that of the outside air, due its intense long wave radiation emission (heat losses) to the sky, especially at clear skies (the sky becomes a radiation sink). The air temperature ($\theta_a$) inside the greenhouse is found to be lower than the plants temperature (see Table 2), as expected.

An attempt is made to compare the cost of heating the screen to the required temperature either by burning oil or by electricity. Example calculations are summarised in Table 3 where it is seen that to heat the screen by hot air produced by burning oil may be more economic than using electricity, but this is highly depended on the electricity unit price, the oil price and the efficiency of the equipment used in the one or the other case.

In case the emissivity of the surface of the heated screen facing the cover ($\varepsilon_{s.c}$) remains the same as the emissivity of the other side surface facing the plants ($\varepsilon_{s.p}$), i.e. both surfaces have equal emissivity values of $\varepsilon_{s.c} = \varepsilon_{s.p}$ = 0.9 then the results of running the above model of Equations 1 to 7, are summarised in Table 4, (all other inputs to the model remain the same, except $\varepsilon_{s.c}$=0.9).

**Table 3. Operating costs per day (€ spent for 5 hours heating based on the input values to the model of Table 1 and the Q values in Table 2)**

| Outside air temperature $\theta_o$ (°C) | -10 | -8 | -6 | -4 | -2 | 0 | 2 | 4 | 6 | 8 |
|---|---|---|---|---|---|---|---|---|---|---|
| Heated Screen using oil for heat production (€)* | 30 | 28 | 26 | 24 | 22 | 20 | 18 | 16 | 14 | 12 |
| Conventional (forced hot air system) using oil for heat production (€)* | 87 | 80 | 72 | 64 | 57 | 49 | 42 | 34 | 26 | 19 |
| Heated Screen using grid electricity for heat production (€) ** | 46 | 43 | 40 | 36 | 33 | 30 | 27 | 24 | 21 | 17 |

* Oil cost: 1 €/10.12 kWh (1 €/L, the calorific value of 1 L of oil is 10.12 kWh)
** Electricity cost: 0.15 €/kWh

**Table 4. Model results (with desired plants' temperature set equal to 13 °C and inputs as in Table 1, except for $\varepsilon_{s.c}$=0.9)**

| Outside air temperature $\theta_o$ (°C) | -4 | -2 | 0 | 2 | 4 | 6 | 8 |
|---|---|---|---|---|---|---|---|
| Greenhouse cover temperature $\theta_c$ (°C) | -0.5 | 0.7 | 1.9 | 3.1 | 4.2 | 5.4 | 6.6 |
| Greenhouse inside air temperature $\theta_a$ (°C) | 11.4 | 11.5 | 11.6 | 11.8 | 11.9 | 12.1 | 12.2 |
| Heated screen temperature $\theta_s$ (°C) | 13.8 | 13.7 | 13.7 | 13.6 | 13.5 | 13.4 | 13.4 |
| Heated Screen power required, Q (kW) | 100 | 99 | 90 | 81 | 71 | 62 | 52 |
| Heated Screen energy required for 5 hours heating, $E_s$ (kWh) | 544 | 498 | 453 | 406 | 360 | 312 | 264 |
| Conventional (forced hot air system) power required (kW) | 130 | 114 | 99 | 84 | 69 | 53 | 38 |
| Conventional system (forced hot air), energy required for t=5 hours heating, $E_c$ (kWh) | 648 | 572 | 496 | 419 | 343 | 267 | 191 |
| **Energy saving achieved by the Heated Screen (%)** | **16.1** | **12.8** | **8.7** | **3.1** | **-4.8** | **-16.9** | **-38.6** |

It is obvious from Table 4 that the low value of the emissivity $\varepsilon_{s.c}$ of the surface of the screen facing the cover plays a key role so that to achieve high energy savings. That is in case $\varepsilon_{s.c}$=0.9, it is seen in Table 4, (contrary to the results of Table 2 where $\varepsilon_{s.c}$ = 0.1), that small percentages of energy savings are achieved when the outside air temperature is lower than 2 °C as compared to the results in Table 2) while no energy saving is achieved when the outside air temperature is higher than 4 °C.

*Innovations of the invention over the prior art*

- The invented radiant heating system is the sole heating system in the greenhouse. It is not a supplementary energy saving system such as the commercially available passive (unheated) so called "thermal screen" system.
- The invented radiant heating system requires the heated screen to be of low temperature (just a few degrees Celsius above the required plants' temperature) contrary to the existing commercially available high temperature radiant heating systems and contrary to proposed radiant systems of which their operating temperature is in the order of several tens or hundreds of degrees Celsius. Preliminary experimental trials have shown that temperatures of the heated screen such as slightly above the optimum plant temperature up to about 10 °C above the optimum plant temperature are adequate to maintain the plants at their optimum temperature, at very low air temperatures outside the greenhouse while achieving high energy saving relative to conventional air heating systems.
- The objective of the invented radiant heating system is to provide heat to the plants (direct heating of the plants) and not heat the greenhouse air. Existing conventional greenhouse heating systems (such as those based on circulation of hot water in steel pipes or on direct use of air heaters) heat the greenhouse air which in turn provides the heat to the plants by convection which is a major reason of low heating efficiency.
- The low operating temperature of the invented system allows for using inexpensive plastic materials for the heated screen, such as low-density polyethylene, while other proposed radiant heating systems requiring higher temperatures cannot not use a cheap material such as polyethylene (because of its low melting point).
- Essential prerequisites of the invented radiant heating system to achieve high energy savings compared to the prior art are, (1) when deployed, it fully encloses the plantation so that the radiated heat from the screen is effectively receipted from the plants while the radiated heat from the plants cannot escape to the cold greenhouse cover, (2) the heated screen side facing the cover has a very low emissivity value (such as lower than 0.2).

*Details of the radiant heating system*

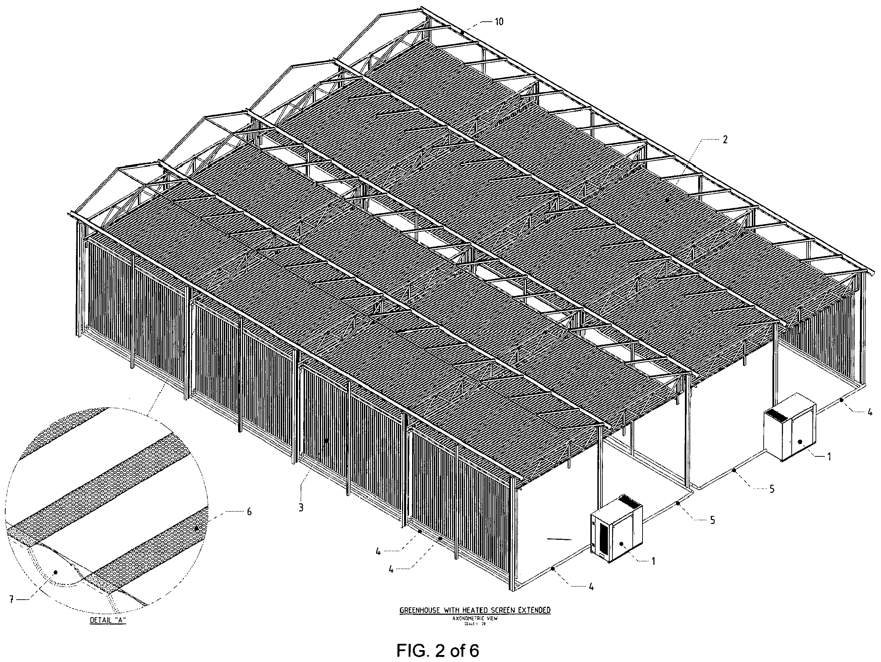

With references to Figures 1 and 2, the heat generating assembly (1) includes a burner and blower assembly (not shown in Figures 1 and 2). The blower operates to project a flow of air through a heat exchanger (not shown in Figures 1 and 2) to be heated and subsequently into ducts (4) to transport the heated air to the horizontal (2) and vertical (3) parts of the screen units (2) and (3) to heat them. Ducts (5) return the air from the radiant heating assembly (heated screen units) to the heat exchanger to be heated again and so on. As it is foreseen from the model of Equations 1 to 7 and its results shown in Table 2, the temperature of the air circulated in the air channels of the heated screen units only slightly depends on the air temperature outside the greenhouse. Theoretically, as shown in Table 2 the heated screen temperature should be only a couple of degrees Celsius above the desired plants' temperature, while in practice as preliminary experimental trials have shown, the heated screen temperature may be a few degrees slightly above the optimum plant temperature up to about 10 °C above the optimum plant temperature. This is a definitive, distinctive feature of the invented system as compared to other radiant heating systems where the heating panels use considerably higher temperatures.

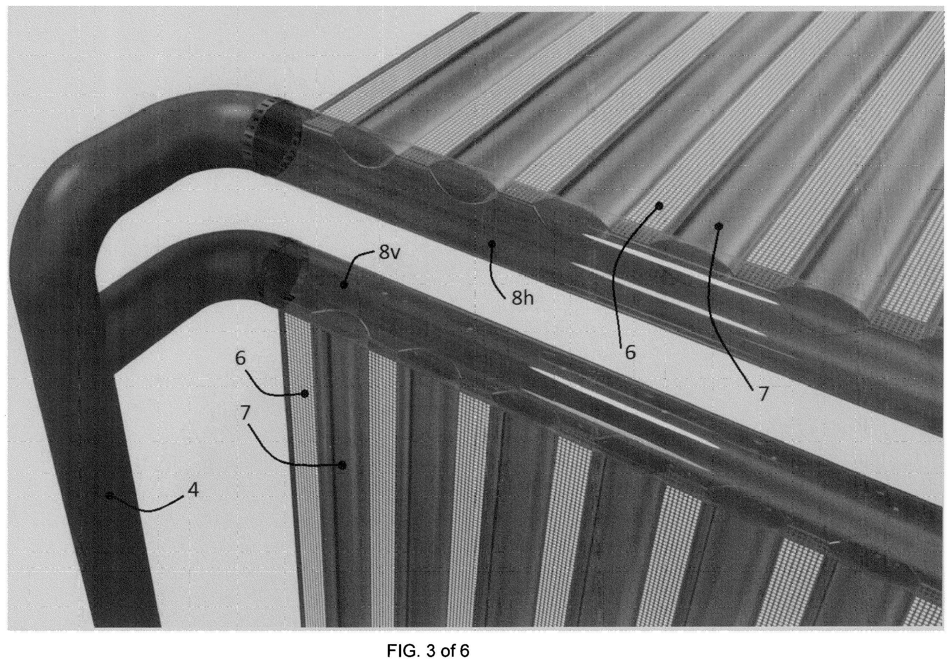

Figure 3 shows an embodiment wherein a vertical duct (4) distributes the heated air to vertical and horizontal channels (8v) and (8h) respectively. The ducts (4) and (5) (see also Figures 1 and 2) that transport, distribute and recirculate the heated air in the greenhouse may be made of inexpensive rigid plastic such as polyethylene or polyvinyl chloride of appropriate cross section size to minimise air flow pressure losses and they are placed at suitable permanent (non-movable) positions near by the construction components of the greenhouse, (posts, trusses, concrete foundation, etc.) so that not to obstruct any farming operations inside the greenhouse. In one embodiment, parts of the ducts' air distribution network are buried at an appropriate depth in the greenhouse soil so that not to cause any disturbance in the cultivation operations inside the greenhouse.

The radiant heating assembly (the heated screen) itself (2) and (3) (see Figure 2) is preferably made of inexpensive low density, flexible (non-rigid) polyethylene plastic sheets. The screen includes a plurality of tubes (7) that is, air flow channels, which are connected to the lateral duct (8h) for the horizontal parts of the screen and lateral duct (8v) for the vertical parts of the screen (Figure 3). Preferably, in the areas between the tubes/channels of the screen (6), the polyethylene sheet is perforated (6), (Figure 3), so that to allow the greenhouse air and moisture to move through, from the one side of the screen to the other, that is from the space that encloses the plants (which will have higher humidity due to the plants' transpiration) to the space between the screen and the greenhouse cover, primarily upwards towards the space between the horizontal parts of the heated screen and the greenhouse roof. In one embodiment, the surface area of the perforated part of the screen is approximately half of the area of the whole heated screen. It is noted that condensation will never be formed on the heated screen as its temperature will always be above the dew point temperature of the humid greenhouse air.

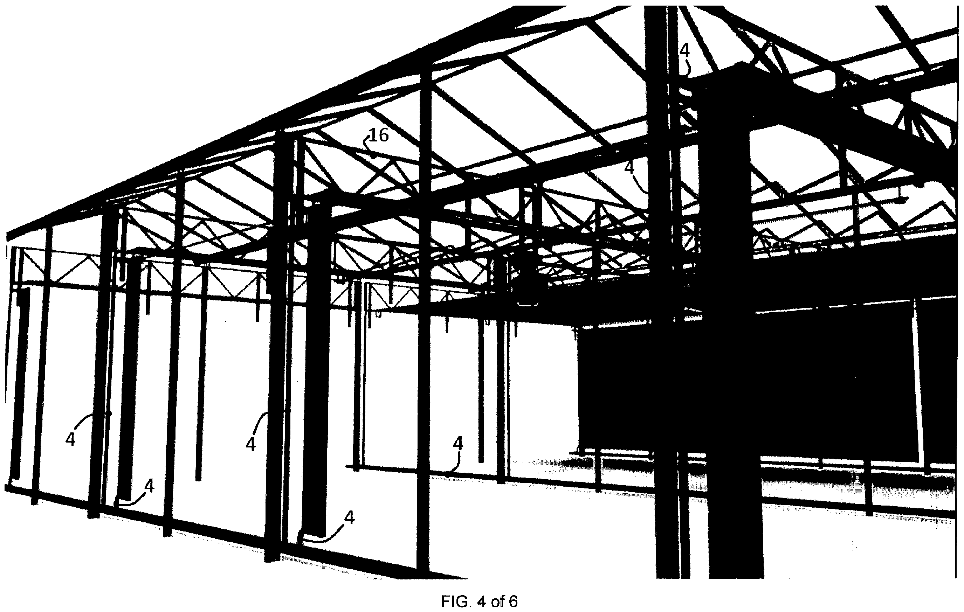

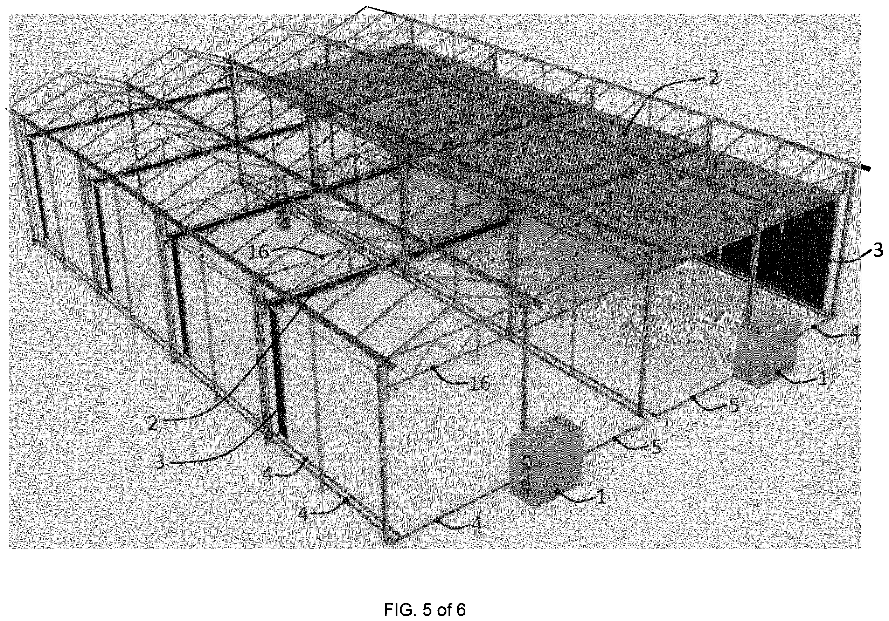

It is desirable that the heated screen surface facing the plants has very high emissivity (to enhance its emissive power) while the screen surfaces (tubes/channels (7) and perforated parts (6)) facing the greenhouse cover (see Figure 3) should have very low emissivity so that to minimize radiant losses of the screen to the cover. In one embodiment, the heated screen surfaces facing the cover is aluminized to provide a low emissivity and high reflectivity to long wave radiation and minimize worthless long wave radiation emission (heat loss) to the cover. In contrast, the other side of the heated screen units (2) and (3) facing the plants, if polyethylene is used, its natural emissivity is already high (~0.9) so no intervention is required. This is valid for most of polymer materials. With reference to Figures 4 and 5, in one embodiment, the radiant heating assembly is consisted of units (modules) that cover the area between two consecutive greenhouse roof trusses (16) (separately for horizontal areas and side walls) in a similar manner that commercially available passive (not heated) "thermal screens" are implemented today between trusses (16). The horizontal parts of the heated screen (2) (Figure 5) are installed at greenhouse eave (gutter) height while the vertical parts of the screen (3) are deployed beside (nearby) the vertical walls of the greenhouse.

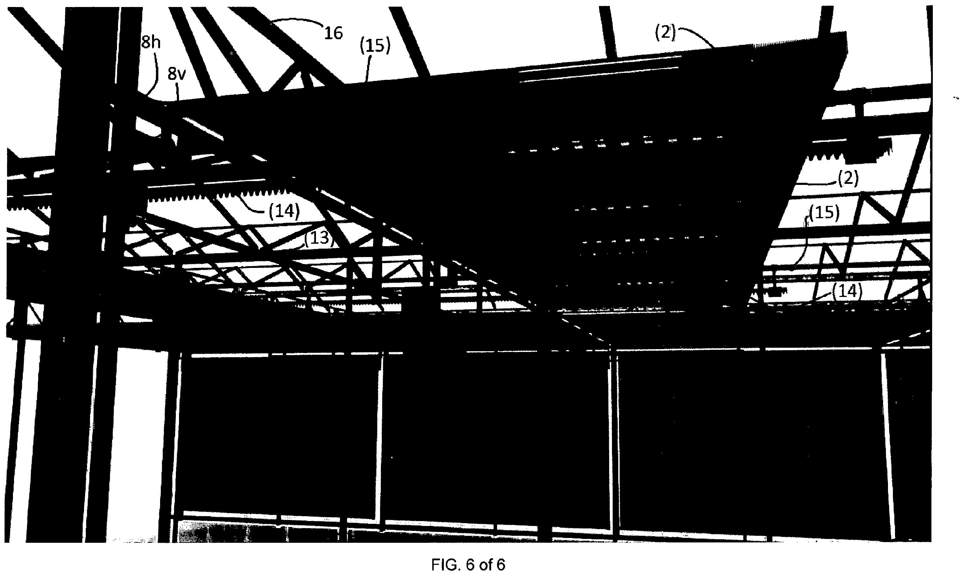

In one embodiment the moving mechanisms for the deployment and the retraction of the screen units, both for the horizontal and vertical parts, include motors, a cable system to prevent the horizontal screen units of forming a deep and remain at horizontal position when deployed, rack gears and long rods at which the edge side of the screen units are attached to so that to deploy and retract them, (Figure 6). Electric motors (11), through gears in gear boxes (12), rotate rods (13) which in turn move rack gears (14) that carry forward long rods (15) to deploy the horizontal part of the heated screen units (2) to cover the space between two successive trusses (16) of the greenhouse. Each screen unit will be deployed and retracted with the same mechanism, provided that the motor will reverse its operation and the screen unit will be retracted backwards through long rods (15) and form a package of a small volume attached to the associated truss and associated vertical post(s) so that not to obstruct solar radiation to enter the greenhouse during daytime.

With reference to Figures 1, 2 and 3, the burner/blower unit (1) operates to produce a low-grade heated air effluent through the heat exchanger, of low temperature (which in any case will always be below the melting point of the polymer material). The heated air is produced through a heat exchanger incorporated in the burner/blower unit (1). A heating fluid such as water or heating oil circulates via an appropriate pump between the burner/furnace and the one side of the heat exchanger while the blower circulates the air to be supplied to the screen units to the other side of the heat exchanger to be heated and then distributed to the screen units and recirculated. Heat is supplied to the one side of the heat exchanger through the burner (or boiler/furnace) where heat is produced by combustion of an appropriate fuel, or an electrical heater equipped with electrical resistor(s). Any fuel can be used by the burner such as solid (e.g., biomass), liquid (e.g., oil, bio-oil) and gaseous (e.g., natural gas, biogas). Alternatively, a heat pump can generate the heated air to be blown to the channels of the screen units. An appropriate number of air supply flow and pressure adjustment motorised dampers are included in the heated air circuit so that to regulate the flow of air and generate a suitable pressure difference before and after the blower so that to keep the screen inflated with the heated air projection. An industrial electronic controller will manage the operation of the burner/furnace, heat exchanger, and blower with the associated motorized air dampers, to produce air of appropriate temperature. By controlling the air temperature in the air flow channels of the screen units, the temperature of the screen will be regulated and in turn adjust the radiant heat needed by the plants to attain their optimum temperature. The temperature of the screen and the plants will be identified, recorded, and controlled in real time using appropriate temperature sensors located at suitable places on the screen and the leaves of the plants or contactless sensors that read the temperatures of the screen surface and of the leaves of the plants, e.g., by Infra-Red (IR) radiation thermometers. In the case of a heating system including heated screen units made of a textile (fabric) material they will be heated by electricity produced by an electricity source, via resistive wires (or other type of electrical conductor) incorporated in the textile material. The textile weaving will be sparse enough so that to allow the greenhouse air and moisture to move through, for the same purpose that the heated screen with the embedded air flow channels is also perforated in the areas outside the air flow channels. A network of wiring in the greenhouse supplies the electricity produced by the electricity source to the resistive wires (or other type of electrical conductor) of the screen units. In some embodiments, an industrial electronic controller regulates the voltage and current supplied from the electricity source to the resistive wires of the screen units via the wiring network so that to regulate the temperature of the resistive wires (or other type of electrical conductors) and subsequently the temperature of the screen using temperature sensors located at suitable locations on the screen and the plants (or other type of contactless temperature sensors). Sets of mechanisms, same as in the case of the air heated screen, are used for deploying and retracting the textile screen units between successive trusses horizontally at ridge height and vertically beside the vertical walls so that when all screen units are deployed to fully enclose the plants inside the enclosure and when retracted to form small packages under the trusses so that to least shade the plants during daytime.

From the foregoing description the experimental setup of the heated screens in various alternative embodiments of the invention are described below:

The plants were in an enclosure such as a greenhouse heated mainly with radiant heat, using heated screens made of a plastic material, heated via low-grade heated air. The greenhouse heating system was as follows:

   a. Heat was provided by a source of low-grade heated air such as a burner/furnace;
   b. A heat exchanger was transferring the heat produced by the burner/furnace to the air to be distributed and recirculated via the blower through the air ducts and the air channels of the screen units;

c. A blower was used for blowing and recirculating the low-grade heated air, in the air ducts and in the air channels of the screen units and back to the heat exchanger;

d. A network of rigid or non-rigid air ducts made of a plastic material such as pvc or polyethylene was used, laid inside the greenhouse enclosure thus forming a network to connect the said blower with the heated screen units, for blowing through the discharge nozzle the low-grade heated air, distributing, and recirculating it to the air channels of the screen units and back to the blower suction nozzle;

e. The said rigid or non-rigid air ducts were equipped with motorized air dampers at appropriate locations of the network for regulating the flow and pressure of the heated air in the network and in the inflated air flow channels of the screen units;

f. An electronic controller was used for regulating the operation of the said burner/furnace, said heat exchanger, and said blower with the associated motorized air dampers, to produce air of appropriate temperature, below the melting point of the plastic materials used in the said heating system, and provide the radiant heat to the plants and keep them at an optimum temperature range; By regulating the air temperature in the air flow channels, the temperature of the screen is regulated. The temperature of the screen and the plants is identified and recorded in real time by appropriate temperature sensors located at suitable places on the screen and the plants.

g. In some embodiments the screen units heated via the low-grade air circulated in the inflated embedded air flow channels are deployable and retractable, so that when deployed to fully enclose the plants inside the greenhouse enclosure and provide radiant heat to the plants inside the enclosure;

h. The said screen units are made of flexible plastic material such as polyethylene, bearing the said embedded inflatable air flow channels, and also bearing perforated parts to allow humid air to move through and also bearing an aluminized coating to the surface of the screen units facing the greenhouse cover and side walls to reduce the emission of unwanted radiant heat to the cover and side walls of the greenhouse enclosure;

i. A set of electric motors and mechanisms were used for deploying and retracting the screen units between successive trusses horizontally at greenhouse ridge height and vertically beside the vertical walls so that when all screen units are deployed to fully enclose the plants inside the enclosure and when retracted to form small packages under the trusses so that to least shade the plants during daytime;

j. In some embodiments the said system of mechanisms including electric motors is using a cable system to prevent the horizontal screen units of forming a deep and stay at horizontal position, rack gears and long rods at which the edge side of the screen units are attached to so that to deploy and retract them.

In some experimental setups, the heated screens were made of a textile (fabric) material heated by electricity, via incorporated resistive wires (or other electricity conductive material). In this case the greenhouse heating system was configured as following:

a. A source of electricity was provided, such as the local electricity grid, a private dedicated electricity source such as an electricity generator powered by an ICE engine, a turbine or similar. The electricity provided by the source may be renewable, generated by any renewable energy technology such as a photovoltaic system, a wind generator, batteries of any type etc. The electricity current can be either direct (DC) or alternating current (AC) of any voltage and wave such as sinusoidal, square etc.

b. The electricity is applied to the heated screen units made of a textile (fabric) material so that be heated by the electricity produced by the said source, via incorporated resistive wires (or other electricity conductive material). The textile weaving will be sparse enough so that to allow the greenhouse air and moisture to move through, (for the same purpose that the heated screen with the embedded air flow channels is also perforated in the areas outside the air flow channels).

c. A network of wiring was provided, to supply the electricity produced by the said source to the resistive wires (or other electricity conductive material) of the screen units.

d. An electronic controller was provided for regulating the voltage and current supplied from the said source to the resistive wires (or other electricity conductive material) of the screen units via the wiring network so that to regulate the temperature of the resistive wires (or other electricity conductive material) and subsequently the temperature of the screen using temperature sensors located at suitable locations on the screen or contactless sensors such as IR radiation sensors;

e. In some embodiments, system of mechanisms was provided, for deploying and retracting the screen units between successive trusses horizontally at ridge height and vertically beside the vertical walls so that when all screens are deployed to fully enclose the plants inside the enclosure and when retracted to form small packages under the trusses so that to least shade the plants during daytime.

f. The said system of mechanisms including electric motors, a cable system is used to prevent the horizontal screen units of forming a deep and stay at horizontal position, rack gears and long rods at which the edge side of the screen units are attached to so that to deploy and retract them. This system is similar to the previously described embodiments using heating the screen units via low-grade heated air.

**References**

[1] Md. Shamim Ahamed, H. Guo, K. Tanino. Energy saving techniques for reducing the heating cost of conventional greenhouses. Biosystems Engineering, (2019), 178, 9-33.

[2] Kaushik, G., & Chel, A. Renewable energy for sustainable agriculture. Agron. Sustain. Development, (2011), 31(1), 91-118.

[3] De Pascale, S., & Maggio, A. Sustainable protected cultivation at Mediterranean climate, perspectives and challenges. Acta Horticulturae, (2004), 691, 29-42.

[4] Gupta M J & Chandra P, Effect of greenhouse design parameters on conservation of energy for greenhouse environmental control. Energy, Vol 27, (2002), 777-794.

[5] Kittas C., Katsoulas N., Baille A. Influence of an aluminized thermal screen on greenhouse microclimate and canopy energy balance, Transactions of the American Society of Agricultural Engineers (2003), 46(6), 1653-1663.

[6] Papadakis G, Briassoulis D, Scarascia Mygnozza G, Vox G, Feuilloley P, Stoffers JA. Radiometric and thermal properties of, and testing methods for, greenhouse covering materials. Journal of Agriculture Engineering Research, (2000), 77(1): 7-38.

[7] Sethi, V. P., & Sharma S. K. Survey and evaluation of heating technologies for worldwide agricultural greenhouse applications. Solar energy, 82, no. 9 (2008): 832-859.

[8] Teitel M., Barak M., Antler A., Effect of cyclic heating and a thermal screen on the nocturnal heat loss and microclimate of a greenhouse. Biosystems Engineering, 102, (2009): 162-170.

[9] Hemming S., Baeza E., Mohammadkhani V. & van Breugel B., Energy saving screen materials, Wageningen University & Research, Report GTB-1431, (2017), pp 92.

[10] Redmond Ramin Shamshiri, James W. Jones, Kelly R. Thorp, Desa Ahmad, Hasfalina Che Man, and Sima Taheri. Review of optimum temperature, humidity, and vapour pressure deficit for microclimate evaluation and control in greenhouse cultivation of tomato: a review. International Agrophysics, 2018, 32, 287-302. Doi: 10.1515/intag-2017-0005. http://archive.sciendo.com/INTAG/intag.2018.32.issue-2/intag-2017-0005/intag-2017-0005.pdf.

[11] Stanghellini Cecilia, van 't Ooster Bert and Heuvelink Ep. Greenhouse horticulture. Technology for optimal crop production. Wageningen Academic Publishers, The Netherlands, 2019, ISBN: 978-90-8686-329-7, doi: 10.3920/978-908686879-7.

[12] Hochmuth G. J. Production of Greenhouse Tomatoes-Florida Greenhouse Vegetable Production Handbook, Vol 3. This document is HS788, one of a series of the Horticultural Sciences Department, UF/IFAS Extension. Original publication date December 1990. Revised January 2012. Reviewed November 2018. Visit the EDIS website at https://edis.ifas.ufl.edu for the currently supported version of this publication. https://ed is. ifas. ufl. ed u/pdf/CV/CV266/CV266-4429807. pdf (Accessed September 2022).

[13] The temperature in the greenhouse for cucumbers. https://burea-uinsurance.com/en/the-temperature-in-the-qreenhouse-for-cucumbers/. (Accessed September 2022).

[14] Papadakis G., Frangoudakis A., Kyritsis S. Experimental investigation and modelling of heat and mass transfer between a tomato crop and the greenhouse environment. Journal of Agricultural Engineering Research, (1994), 57, pp 217-227.

[15] Itagi T., & Takahashi, M. Studies on the practical use of infrared heater in greenhouse. Kanagawa Hort. Exp. Station Bill, (1978), 25, 45-5.

[16] Kavga A., Panidis T., Bontozoglou V., & Pantelakis S. Infrared heating of greenhouses revisited: an experimental and modeling study. Transactions of the ASABE, (2009), vol. 52, no. 6, pp. 2055-2065.

[17] Kavga A., Konstas T., Panidis I., T. Assessment of infrared heating benefits in a production greenhouse. Applied Engineering in Agriculture, (2015), Vol. 31(1): 143-151.

[18] J.H. Lienhard IV & J.H. Lienhard V. A heat transfer textbook. 3rd edition (2008), Phlogiston Press, pp 750.

[19] EN ISO 52016-1. ISO, International Standard ISO 52016-1:2017, Energy Performance of Buildings - Energy Needs for Heating and Cooling, Internal Temperatures and Sensible and Latent Heat Loads - Part 1: Calculation Procedures, (2017). www.uni.com.

[20] Wanga H., Sánchez-Molinaa J.A., Li M., Berenguel M., Yang X.T., Bienvenido J.F. Leaf area index estimation for a greenhouse transpiration model using external climate conditions based on genetics algorithms, back-propagation neural networks and nonlinear autoregressive exogenous models. Agricultural Water Management, 183 (2017) 107-115.

[21] Papadakis G., Frangoudakis A., Kyritsis S. Mixed, forced and free convection heat transfer at the greenhouse cover. Journal of Agricultural Engineering Research, (1992), 51 pp 191-205.

[22] US 3399833 A (COMBUSTION RESEARCH CORP) 3/9/1968
[23] US 4319125 A (SOLARONICS INC) 9/3/1982
[24] KR 2010 0110659 A (KIM HONG GEUN [KR]) 13 October 2010
[25] CN 212 851 983 U (HANGZHOU TIANBANG AGRICULTURAL FACILITIES CO LTD) 2 April 2021
[26] CN 206 042 941 U (ZHENGZHOU VEGETABLE RES INST) 29 March 2017
[27] WO 92/22196 A1 (COMBUSTION RES CORP [US]) 23 December 1992

**Claims**

1. A greenhouse heating system comprising a thermal source (1), a heat transfer system and one or more heated screen units (2), (3), wherein the said heated screen units are configured to enclose non permanently the plantation of the greenhouse **characterized in that** the said heated screen units' surfaces facing the plants have higher or equal emissivity than 0.9, the said heated screen units surfaces facing the greenhouse cover have lower or equal emissivity than 0.2, and that the said heating system is configured to heat the said heated screen units to a temperature of 0.5 °C to 10 °C above the required plants' optimum growth temperature.

2. A greenhouse heating system according to claim 1, wherein the said heated screen units (2), (3) are perforated or have small throughout holes (6) on their surfaces configured to allow the moisture to pass.

3. A greenhouse heating system according to any of the claims 1 to 2, wherein the said heated screen units (2), (3) comprise a textile material.

4. A greenhouse heating system according to the claim 3, wherein the said heated screen units (2), (3) are further comprising resistive wires or other electricity conductive material incorporated in the textile material configured to be heated by an electricity source.

5. A greenhouse heating system according to the claim 4, wherein the said resistive wires or other electricity conductive material incorporated in the textile material are distributed evenly in the area of the said screen units so to be configured to produce a uniform heating result along to the said screen units' surface facing the plants.

6. A greenhouse heating system according to any of the claims 1 to 2, wherein the said heated screen units (2), (3) comprise a polymeric material and preferably a polymeric material comprising PVC or Polyethylene.

7. A greenhouse heating system according to any of the claims claim 1, 2, 6 wherein the said heated screen units (2), (3) comprise fluid flow channels (7) configured to heat the screen units upon the flow of heated air or liquid, wherein the said fluid preferably is air, oil, water or other type of fluids.

8. A greenhouse heating system according to claim 7 wherein the said fluid flow channels (7) are distributed evenly to the area of the said screen units so to be configured to produce a uniform heating result along the said screen units' surface facing the plants.

9. A greenhouse heating system according any of the claims 6 to 8, wherein the thermal source (1) is a combustion system configured to burn solid fuels, preferably biomass or liquid fuels preferably oil or bio-oil or gaseous fuels, preferably natural gas or biogas or alternatively a heat pump configured to generate heated air or water or alternatively an electrical resistance system configured to heat a fluid and preferably air, water or oil upon the application of electrical power.

10. A method of heating a greenhouse plantation with radiant heating, comprising the following steps:

   - Enclosing fully the greenhouse plantation with the greenhouse heating system of any of the claims 1 to 9.
   - Placing the heated screens unit's surface with the higher emissivity to face the plants and the lower emissivity to face away from the plants.
   - Heating uniformly the said heated screen units (2), (3) to a set temperature, in the range of 0.5 °C to 10 °C degrees above the plants' optimum growth temperature.
   - Emitting radiant heating from the said heated screens to the plants of the said greenhouse.
   - Regulating the heated screen units' temperature to maintain the plants at their optimum growth temperature.

11. A method of heating a greenhouse plantation with radiant heating, according to claim 10, further comprising the regulation of the heat of the heated screen units (2), (3) by regulating the heat supplied to the air in the fluid flow channels of the screen units at the burner/blower unit (1), when the said heated screen units comprise fluid flow channels (7) configured to heat the screen units upon the flow of heated air or liquid.

12. A method of heating a greenhouse plantation with radiant heating, according to claim 10, further comprising the regulation of the heat of the heated screen units by regulating the amount of power supplied to the resistive wires or other type of electrical conductors, incorporated in the textile of the screen units, when the said heated screen units are comprising resistive wires or other electricity conductive material incorporated in the textile material so that they are configured to be heated by an electricity source.

13. A method of heating a greenhouse plantation with radiant heating, according to any of the claims 10 to 12, further comprising the step of transferring the excess moisture of the greenhouse air enclosed by the said screen units to the outside area of the enclosed by the screen units, greenhouse air via throughout holes (6) on the said screen units' volume.

14. A method of heating a greenhouse plantation with radiant heating, according any of the claims 10 to 13, further comprising the step of enclosing the greenhouse plantation by developing the heated screen units (2), (3), manually or by an electromechanical system and initiating the heating, while the said heated screen units are retracted when the heating is not required.

15. A method of heating a greenhouse plantation with radiant heating, according any of the claims 10, 11, 13 and 14, comprising heating the heated screen units incorporating fluid flow channels by a hot fluid, heated by a burner or by a heat pump or by electrical resistance circuit, and transferred to the heated screen units by ducts at the selected set temperature, regulated by a temperature controller.

GREENHOUSE WITH HEATED SCREEN FOLDED/EXTENDED
AXONOMETRIC VIEW
SCALE 1:25

## FIG. 1 of 6

DETAIL "A"

GREENHOUSE WITH HEATED SCREEN EXTENDED
AXONOMETRIC VIEW
SCALE 1:20

FIG. 2 of 6

FIG. 3 of 6

FIG. 4 of 6

FIG. 5 of 6

FIG. 6 of 6

Europäisches
Patentamt

European
Patent Office

Office européen
des brevets

# EUROPEAN SEARCH REPORT

Application Number

EP 22 00 0254

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | CN 206 042 941 U (ZHENGZHOU VEGETABLE RES INST) 29 March 2017 (2017-03-29) * claims 1, 3; figure 1 * * paragraphs [0025] – [0026] * | 1-6,10, 12-14 | INV. A01G9/22 A01G9/24 |
| Y | | 7-9,11, 15 | |
| Y,D | WO 92/22196 A1 (COMBUSTION RES CORP [US]) 23 December 1992 (1992-12-23) * claims 1-2, 14; figures 1-2 * | 7-9,11, 15 | |
| A | | 1,10 | |
| A,D | CN 212 851 983 U (HANGZHOU TIANBANG AGRICULTURAL FACILITIES CO LTD) 2 April 2021 (2021-04-02) * paragraphs [0019] – [0024]; figures 1-2 * | 1,2,10, 13 | |
| A,D | KR 2010 0110659 A (KIM HONG GEUN [KR]) 13 October 2010 (2010-10-13) * figure 2 * | 1,10 | |

TECHNICAL FIELDS SEARCHED (IPC)

A01G
B07B

The present search report has been drawn up for all claims

| Place of search | Date of completion of the search | Examiner |
|---|---|---|
| The Hague | 17 March 2023 | Guillem Gisbert, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 00 0254

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2023

| Patent document cited in search report | | Publication date | Patent family member(s) | | Publication date |
|---|---|---|---|---|---|
| CN 206042941 | U | 29-03-2017 | NONE | | |
| WO 9222196 | A1 | 23-12-1992 | AU | 660692 B2 | 06-07-1995 |
| | | | CA | 2088486 A1 | 11-12-1992 |
| | | | US | 5188288 A | 23-02-1993 |
| | | | US | 5261928 A | 16-11-1993 |
| | | | WO | 9222196 A1 | 23-12-1992 |
| CN 212851983 | U | 02-04-2021 | NONE | | |
| KR 20100110659 | A | 13-10-2010 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3399833 A, Johnson
- US 4319125 A
- KR 20100110659 A, KIM HONG GEUN
- CN 212851983 U
- CN 206042941 U
- WO 9222196 A1
- US 391968 A
- US 931982 A

**Non-patent literature cited in the description**

- **MD. SHAMIM AHAMED ; H. GUO ; K. TANINO.** Energy saving techniques for reducing the heating cost of conventional greenhouses. *Biosystems Engineering,* 2019, vol. 178, 9-33
- **KAUSHIK, G. ; CHEL, A.** Renewable energy for sustainable agriculture. *Agron. Sustain. Development,* 2011, vol. 31 (1), 91-118
- **DE PASCALE, S. ; MAGGIO, A.** Sustainable protected cultivation at Mediterranean climate, perspectives and challenges. *Acta Horticulturae,* 2004, vol. 691, 29-42
- **GUPTA M J ; CHANDRA P.** Effect of greenhouse design parameters on conservation of energy for greenhouse environmental control. *Energy,* 2002, vol. 27, 777-794
- **KITTAS C. ; KATSOULAS N. ; BAILLE A.** Influence of an aluminized thermal screen on greenhouse microclimate and canopy energy balance. *Transactions of the American Society of Agricultural Engineers,* 2003, vol. 46 (6), 1653-1663
- **PAPADAKIS G ; BRIASSOULIS D ; SCARASCIA MYGNOZZA G ; VOX G ; FEUILLOLEY P ; STOFFERS JA.** Radiometric and thermal properties of, and testing methods for, greenhouse covering materials. *Journal of Agriculture Engineering Research,* 2000, vol. 77 (1), 7-38
- **SETHI, V. P. ; SHARMA S. K.** Survey and evaluation of heating technologies for worldwide agricultural greenhouse applications. *Solar energy,* 2008, vol. 82 (9), 832-859
- **TEITEL M. ; BARAK M. ; ANTLER A.** Effect of cyclic heating and a thermal screen on the nocturnal heat loss and microclimate of a greenhouse. *Biosystems Engineering,* 2009, vol. 102, 162-170
- **HEMMING S. ; BAEZA E. ; MOHAMMADKHANI V. ; VAN BREUGEL B.** Energy saving screen materials. Wageningen University & Research, 2017, 92
- **REDMOND RAMIN SHAMSHIRI ; JAMES W. JONES ; KELLY R. THORP ; DESA AHMAD ; HASFALINA CHE MAN ; SIMA TAHERI.** Review of optimum temperature, humidity, and vapour pressure deficit for microclimate evaluation and control in greenhouse cultivation of tomato: a review. *International Agrophysics,* 2018, vol. 32, 287-302, http://archive.sciendo.com/INTAG/intag.2018.32.issue-2/intag-2017-0005/intag-2017-0005.pd
- Greenhouse horticulture. **STANGHELLINI CECILIA ; VAN 'T OOSTER BERT ; HEUVELINK EP.** Technology for optimal crop production. Wageningen Academic Publishers, 2019
- **HOCHMUTH G. J.** Production of Greenhouse Tomatoes-Florida Greenhouse Vegetable Production Handbook. Horticultural Sciences Department, UF/IFAS Extension, December 1990, vol. 3
- *The temperature in the greenhouse for cucumbers,* September 2022, https://burea-uinsurance.com/en/the-temperature-in-the-qreenhouse-for-cucumbers
- **PAPADAKIS G. ; FRANGOUDAKIS A. ; KYRITSIS S.** Experimental investigation and modelling of heat and mass transfer between a tomato crop and the greenhouse environment. *Journal of Agricultural Engineering Research,* 1994, vol. 57, 217-227
- **ITAGI T. ; TAKAHASHI, M.** Studies on the practical use of infrared heater in greenhouse. *Kanagawa Hort. Exp. Station Bill,* 1978, vol. 25, 45-5
- **KAVGA A. ; PANIDIS T. ; BONTOZOGLOU V. ; PANTELAKIS S.** Infrared heating of greenhouses revisited: an experimental and modeling study. *Transactions of the ASABE,* 2009, vol. 52 (6), 2055-2065
- **KAVGA A. ; KONSTAS T. ; PANIDIS I., T.** Assessment of infrared heating benefits in a production greenhouse. *Applied Engineering in Agriculture,* 2015, vol. 31 (1), 143-151
- **J.H. LIENHARD IV ; J.H. LIENHARD V.** A heat transfer textbook. Phlogiston Press, 2008, 750

• **WANGA H. ; SÁNCHEZ-MOLINAA J.A. ; LI M. ; BE-RENGUEL M. ; YANG X.T. ; BIENVENIDO J.F.** Leaf area index estimation for a greenhouse transpiration model using external climate conditions based on genetics algorithms, back-propagation neural networks and nonlinear autoregressive exogenous models. *Agricultural Water Management,* 2017, vol. 183, 107-115

• **PAPADAKIS G. ; FRANGOUDAKIS A. ; KYRITSIS S.** Mixed, forced and free convection heat transfer at the greenhouse cover. *Journal of Agricultural Engineering Research,* 1992, vol. 51, 191-205